# EUROPEAN PATENT SPECIFICATION

(11) **EP 3 851 506 B1**
(45) Date of publication and mention of the grant of the patent: **17.04.2024**
(21) Application number: 19858937.6
(22) Date of filing: 12.09.2019
(51) Int. Cl.: C10M 115/08, C10M 137/10, C10M 139/00, F16D 3/20, C10N 30/06, C10N 40/04, C10N 50/10

(54) **GREASE COMPOSITION FOR CONSTANT VELOCITY JOINT**
SCHMIERMITTELZUSAMMENSETZUNG UND GLEICHLAUFGELENK
COMPOSITION DE GRAISSE POUR JOINT HOMOCINÉTIQUE

(30) Priority: 14.09.2018 JP 2018172916
(43) Date of publication of application: 21.07.2021
(73) Proprietor: Idemitsu Kosan Co., Ltd, Tokyo 100-8321 (JP)
(72) Inventor: KOGA, Asami, Ichihara-shi, Chiba 299-0193 (JP); SHISHIKURA, Akihiro, Ichihara-shi, Chiba 299-0107 (JP)
(74) Representative: Hoffmann Eitle
(86) International application number: PCT/JP2019/035906
(87) International publication number: WO 2020/054802

(56) References cited:
- WO-A1-2016/125859
- JP-A- H1 121 580
- JP-A- 2003 155 491
- JP-A- 2006 335 876
- JP-A- 2011 063 659
- US-A1- 2003 139 302

## Description

### Technical Field

The present invention relates to a grease composition for a constant velocity joint.

### Background Art

A constant velocity joint is a component that is used for transmitting a rotational movement, and is a generic name of a joint that is capable of smoothly transmitting a torque through constant velocity rotation of the input shaft and the output shaft even though there is an angle between the shafts.

A constant velocity joint has a wide range of application including a front wheel drive axle, a rear wheel drive axle, a propeller shaft, and a steering axle of an automobile, and various general industrial machines.

A constant velocity joint receives a high surface pressure in rotating, and simultaneously receives a complex rolling sliding action therein. Therefore, the rolling sliding portion of the constant velocity joint tends to receive a heavy load and tends to be worn. Accordingly, for efficiently lubricating the constant velocity joint and enhancing the durability of the constant velocity joint, various grease compositions for a constant velocity joint excellent in wear resistance have been proposed.

For example, PTL 1 describes a grease composition for a constant velocity joint containing a base oil, a urea-based thickening agent, a molybdenum dithiocarbamate, a calcium salt, a thiophosphate, and a sulfur-phosphorus-based extreme pressure agent other than the thiophosphate.

PTL 2 describes a grease composition for a constant velocity joint containing a base oil, a urea-based thickening agent formed of a diurea compound, a molybdenum dialkyldithiocarbamate sulfide, molybdenum disulfide, a zinc dithiophosphate compound, and a sulfur-based extreme pressure additive containing no phosphorus.
US 2003/0139302 A1 describes grease compositions comprising a mineral base oil and a thickener material, which includes diphenylmethane 4,4'diisocyanate (MDI), cyclohexylamine (Cy) and stearylamine (C18) in a molar ratio of 5:7:3. JP 2006 335876 A exemplifies greases including a mineral oil, 60.6 g MDI, 24.1 g Cy and 65.5 g C18. WO 2016/125859 A1 relates to a grease comprising a mineral oil, 11 mass% MDI, 11.1 mass% C18 and 2.13 mass% Cy. JP H11 21580 A describes a grease comprising a poly-α-olefin synthetic oil, 5 pbw MDI, 2 pbw Cy and 5 pbw C 18.

### Citation List

### Patent Literatures

PTL 1: JP 11-172276 A
PTL 2: JP 10-273691 A

### Summary of Invention

### Technical Problem

In preparation for the enhancement of the performance, the silence, the ride quality, and the like of automobiles, and for the enhancement of the performance, the silence, the accuracy, and the like of general industrial machines, in recent years, there are severer demands for decreasing the vibration and prolonging the lifetime of a constant velocity joint.

However, the grease compositions for a constant velocity joint described in PTLs 1 and 2 are insufficient in wear resistance.

Under the circumstances, an object of the present invention is to provide a grease composition for a constant velocity joint that has an excellent wear resistance.

### Solution to Problem

The present inventors have found that the problem can be solved by using a diurea compound having a particular structure as a urea-based thickening agent.

The present invention relates to the following item [1],
[1] A grease composition for a constant velocity joint, containing a base oil (A) and a urea-based thickening agent (B) represented by the following general formula (B1):

   R¹-NHCONH-R³-NHCONH-R² (B1)

   wherein in the general formula (B1), R¹ and R² each independently represent a monovalent hydrocarbon group having 6 to 24 carbon atoms, provided that R¹ and R² may be the same as or different from each other; and R³ represents a divalent aromatic hydrocarbon group having 6 to 18 carbon atoms, and
   the monovalent hydrocarbon group contains an alicyclic hydrocarbon group and a chain hydrocarbon group, and may contain an aromatic hydrocarbon group, provided that assuming that in R¹ and R² in the general formula (B1), the content of the alicyclic hydrocarbon group is X molar equivalent, the content of the chain hydrocarbon group is Y molar equivalent, and the content of the aromatic hydrocarbon group is Z molar equivalent, the following requirements (a) and (b) are satisfied:
   requirement (a): a value of {(X+Y)/(X+Y+Z)}×100 is 90 or more
   requirement (b): an X/Y ratio is 10/90 to 75/25, as further defined in claim 1.

### Advantageous Effects of Invention

According to the present invention, a grease composition for a constant velocity joint that has an excellent wear resistance can be provided.

### Brief Description of Drawings

Fig. 1 is a schematic cross sectional view of a grease production apparatus that is capable of being used in one embodiment of the present invention.
Fig. 2 is a schematic cross sectional view in the horizontal direction of a stirring part of the grease production apparatus shown in Fig. 1.
Fig. 3 is a graph showing an example of a particle diameter distribution curve based on a volume basis in a light scattering particle diameter measurement of the particles containing the urea-based thickening agent (B) in the grease composition.

### Description of Embodiment

The present invention will be described in detail below.

In the following description, a "grease composition for a constant velocity joint" may be referred simply to as a "grease composition".

In the following description, a "base oil (A)", a "urea-based thickening agent (B)", an "organic molybdenum-based compound (C)", and a "zinc dithiophosphate (D)" may be referred simply to as a "component (A)", a "component (B)", a "component (C)", and a "component (D)", respectively.

### [Grease Composition for Constant Velocity Joint]

The grease composition for a constant velocity joint of the present invention contains a base oil (A) and a urea-based thickening agent (B) represented by the following general formula (B1).

R¹-NHCONH-R³-NHCONH-R² (B1)

In the general formula (B1), R¹ and R² each independently represent a monovalent hydrocarbon group having 6 to 24 carbon atoms, provided that R¹ and R² may be the same as or different from each other; and R³ represents a divalent aromatic hydrocarbon group having 6 to 18 carbon atoms.

The monovalent hydrocarbon group contains an alicyclic hydrocarbon group and a chain hydrocarbon group, and may contain an aromatic hydrocarbon group, provided that assuming that in R¹ and R² in the general formula (B1), the content of the alicyclic hydrocarbon group is X molar equivalent, the content of the chain hydrocarbon group is Y molar equivalent, and the content of the aromatic hydrocarbon group is Z molar equivalent, the following requirements (a) and (b) are satisfied.
Requirement (a): a value of {(X+Y)/(X+Y+Z)}×100 is 90 or more
Requirement (b): an X/Y ratio is 10/90 to 75/25

The grease composition of the present invention may contain other components than the component (A) and the component (B) in such a range that does not impair the effects of the present invention.

In the grease composition of one embodiment of the present invention, the total content of the component (A) and the component (B) is preferably 70% by mass or more, more preferably 75% by mass or more, further preferably 80% by mass or more, still further preferably 85% by mass or more, and still more further preferably 90% by mass or more, based on the total amount (100% by mass) of the grease composition.

In the grease composition of one embodiment of the present invention, the upper limit of the total content of the component (A) and the component (B) may be 100% by mass, and is generally 98% by mass or less, preferably 97% by mass or less, more preferably 96% by mass or less, and further preferably 95% by mass or less, based on the total amount (100% by mass) of the grease composition.

The grease composition of the present invention contains an organic molybdenum-based compound (C) and a zinc dithiophosphate (D), in addition to the components (A) and (B). In the case where the grease composition contains one or more kind of the additive selected from an organic molybdenum-based compound (C) and a zinc dithiophosphate (D), the friction coefficient of the rolling sliding portion of the constant velocity joint, to which the grease is applied, can be decreased, and simultaneously the grease composition can have a further excellent wear resistance.

In the grease composition of one embodiment of the present invention, the total content of the component (A), the component (B), and one or more kind of the additive selected from the component (C) and the component (D) is preferably 75% by mass or more, more preferably 80% by mass or more, further preferably 85% by mass or more, still further preferably 90% by mass or more, and still more further preferably 95% by mass or more, based on the total amount (100% by mass) of the grease composition.

In the grease composition of one embodiment of the present invention, the upper limit of the total content of the component (A), the component (B), and one or more kind of the additive selected from the component (C) and the component (D) may be 100% by mass, and is generally 99% by mass or less, and preferably 98% by mass or less, based on the total amount (100% by mass) of the grease composition.

The grease composition of one embodiment of the present invention may contain a grease additive other than the component (C) and the component (D) in such a range that does not impair the effects of the present invention.

In the following description, the grease additive may be referred to as an "additional grease additive".

In the following description, the base oil (A), the urea-based thickening agent (B), the organic molybdenum-based compound (C), the zinc dithiophosphate (D), and the additional grease additive will be described in detail, and then the production method of the grease composition, the properties of the grease composition, and the use method of the grease composition will be described.

### <Base Oil (A)>

The grease composition of the present invention contains the base oil (A).

The base oil (A) is not particularly limited, and an ordinary base oil that is used in a grease composition may be used. Examples thereof used include one or more kind selected from a mineral oil and a synthetic oil.

Examples of the mineral oil include a distillate oil obtained through atmospheric distillation and/or distillation under reduced pressure of a paraffin-based crude oil, an intermediate-based crude oil, or a naphthene-based crude oil; and a refined oil obtained through refinement of these distillate oils according to an ordinary method.

Examples of the refining method for providing the refined oil include one or more kind selected from a hydrogenation reforming treatment, a solvent extraction treatment, a solvent dewaxing treatment, a clay treatment, a hydroisomerization dewaxing treatment, and a hydrofinishing treatment. The mineral oil may be used alone or as a combination of two or more kinds thereof.

Examples of the synthetic oil include a hydrocarbon-based oil, an aromatic-based oil, an ester-based oil, an ether-based oil, and a GTL (gas to liquid) base oil obtained through isomerization of wax produced from natural gas by the Fischer-Tropsch process.

Examples of the hydrocarbon-based oil include normal paraffin, isoparaffin, polybutene, polyisobutylene, a poly-α-olefin (PAO), such as a 1-decene oligomer and a co-oligomer of 1-decene and ethylene, and hydrides thereof.

Examples of the aromatic-based oil include an alkylbenzene, such as a monoalkylbenzene and a dialkylbenzene; and an alkylnaphthalene, such as a monoalkylnaphthalene, a dialkylnaphthalene, and a polyalkylnaphthalene.

Examples of the ester-based oil include a diester-based oil, such as dibutyl sebacate, di-2-ethylhexyl sebacate, dioctyl adipate, diisodecyl adipate, ditridecyl adipate, ditridecyl glutarate, and methyl acetyl ricinolate; an aromatic ester-based oil, such as trioctyl trimellitate, tridecyl trimellitate, and tetraoctyl pyromellitate; a polyol ester-based oil, such as trimethylolpropane caprylate, trimethylolpropane pelargonate, pentaerythritol-2-ethylhexanoate, and pentaerythritol pelargonate; and a complex ester-based oil, such as an oligoester of a polyhydric alcohol with a mixed fatty acid of a dibasic acid and a monobasic acid.

Examples of the ether-based oil include a polyglycol, such as polyethylene glycol, polypropylene glycol, polyethylene glycol monoether, and polypropylene glycol monoether; and a phenyl ether-based oil, such as a monoalkyl triphenyl ether, an alkyl diphenyl ether, a dialkyl diphenyl ether, pentaphenyl ether, tetraphenyl ether, a monoalkyl tetraphenyl ether, and a dialkyl tetraphenyl ether.

The synthetic oil may be used alone or as a combination of two or more kinds thereof.

The kinematic viscosity at 40°C of the base oil (A) used in one embodiment of the present invention is preferably 30 to 1,000 mm²/s, more preferably 40 to 700 mm²/s, and further preferably 50 to 500 mm²/s.

In the case where the kinematic viscosity is in the range, the grease composition can have an appropriate oil separation capability, which facilitates the supply of the base oil (A) to the contact part of the rolling portion and the sliding portion of the constant velocity joint. Furthermore, the base oil (A) can readily provide an excellent oil film retention capability between two components. Consequently, the grease composition can have good usability for a prolonged period of time.

The base oil (A) used in one embodiment of the present invention may be a mixed base oil prepared by mixing a high viscosity base oil (A1) and a low viscosity base oil (A2) to have a kinematic viscosity at 40°C thereof within the aforementioned range, from the standpoint of the further enhancement of the wear resistance of the grease composition.

The viscosity index of the base oil (A) used in one embodiment of the present invention is preferably 60 or more, more preferably 70 or more, further preferably 80 or more, still further preferably 90 or more, and still more further preferably 100 or more.

In the description herein, the kinematic viscosity and the viscosity index mean values that are measured and calculated according to JIS K2283:2000.

In the grease composition of one embodiment of the present invention, the content of the base oil (A) is preferably 50% by mass or more, more preferably 60% by mass or more, further preferably 65% by mass or more, and still further preferably 70% by mass or more, and is preferably 98% by mass or less, more preferably 97% by mass or less, and further preferably 96% by mass or less, based on the total amount (100% by mass) of the grease composition.

### <Urea-based Thickening Agent (B)>

The grease composition of the present invention contains the urea-based thickening agent (B).

The urea-based thickening agent (B) used in the grease composition of the present invention is a diurea compound represented by the following general formula (B1):

R¹-NHCONH-R³-NHCONH-R² (B1)

In the general formula (B1), R¹ and R² each independently represent a monovalent hydrocarbon group having 6 to 24 carbon atoms. R¹ and R² may be the same as or different from each other. R³ represents a divalent aromatic hydrocarbon group having 6 to 18 carbon atoms.

The monovalent hydrocarbon group contains an alicyclic hydrocarbon group and a chain hydrocarbon group, and may contain an aromatic hydrocarbon group.

The alicyclic hydrocarbon group and the chain hydrocarbon group each may be saturated or unsaturated.

The number of carbon atoms of the monovalent hydrocarbon group that may be selected as R¹ and R² is 6 to 24, and is preferably 6 to 20, and more preferably 6 to 18, from the standpoint of the achievement of the grease composition having a further excellent wear resistance.

Examples of the monovalent saturated chain hydrocarbon group that may be selected as R¹ and R² include a linear or branched alkyl group having 6 to 24 carbon atoms, and specific examples thereof include a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group (stearyl group), a nonadecyl group, and an icosyl group.

Among these, an octadecyl group (stearyl group) is preferred.

Examples of the monovalent unsaturated chain hydrocarbon group that may be selected as R¹ and R² include a linear or branched alkenyl group having 6 to 24 carbon atoms, and specific examples thereof include a hexenyl group, a heptenyl group, an octenyl group, a nonenyl group, a decenyl group, a dodecenyl group, a tridecenyl group, a tetradecenyl group, a pentadecenyl group, a hexadecenyl group, an octadecenyl group, a nonadecenyl group, an eicosenyl group, an oleyl group, a geranyl group, a farnesyl group, and a linoleyl group.

The monovalent saturated chain hydrocarbon group and the monovalent unsaturated chain hydrocarbon group each may be linear or branched.

Examples of the monovalent saturated alicyclic hydrocarbon group that may be selected as R¹ and R² include a cycloalkyl group, such as a cyclohexyl group, a cycloheptyl group, a cyclooctyl group, and a cyclononyl group; and a cycloalkyl group substituted with an alkyl group having 1 to 6 carbon atoms (preferably a cyclohexyl group substituted with an alkyl group having 1 to 6 carbon atoms), such as a methylcyclohexyl group, a dimethylcyclohexyl group, an ethylcyclohexyl group, a diethylcyclohexyl group, a propylcyclohexyl group, an isopropylcyclohexyl group, a 1-methyl-propylcyclohexyl group, a butylcyclohexyl group, a pentylcyclohexyl group, a pentyl-methylcyclohexyl group, and a hexylcyclohexyl group.

Among these, a cyclohexyl group is preferred.

Examples of the monovalent unsaturated alicyclic hydrocarbon group that may be selected as R¹ and R² include a cycloalkenyl group, such as a cyclohexenyl group, a cycloheptenyl group, and a cyclooctenyl group; and a cycloalkenyl group substituted with an alkyl group having 1 to 6 carbon atoms (preferably a cyclohexenyl group substituted with an alkyl group having 1 to 6 carbon atoms), such as a methylcyclohexenyl group, a dimethylcyclohexenyl group, an ethylcyclohexenyl group, a diethylcyclohexenyl group, and a propylcyclohexenyl group.

Examples of the monovalent aromatic hydrocarbon group that may be selected as R¹ and R² include a phenyl group, a biphenyl group, a terphenyl group, a naphthyl group, a diphenylmethyl group, a diphenylethyl group, a diphenylpropyl group, a methylphenyl group, a dimethylphenyl group, an ethylphenyl group, and a propylphenyl group.

The number of carbon atoms of the divalent aromatic hydrocarbon group that may be selected as R³ in the general formula (B1) is 6 to 18, and is preferably 6 to 15, and more preferably 6 to 13.

Examples of the divalent aromatic hydrocarbon group that may be selected as R³ include a phenylene group, a diphenylmethylene group, a diphenylethylene group, a diphenylpropylene group, a methylphenylene group, a dimethylphenylene group, and an ethylphenylene group.

Among these, a phenylene group, a diphenylmethylene group, a diphenylethylene group, and a diphenylpropylene group are preferred, and a diphenylmethylene group is more preferred.

The monovalent hydrocarbon group contains an alicyclic hydrocarbon group and a chain hydrocarbon group, and may contain an aromatic hydrocarbon group, as described above. Assuming that in R¹ and R² in the general formula

(B1), the content of the alicyclic hydrocarbon group is X molar equivalent, the content of the chain hydrocarbon group is Y molar equivalent, and the content of the aromatic hydrocarbon group is Z molar equivalent, the following requirements (a) and (b) are necessarily satisfied.
Requirement (a): a value of {(X+Y)/(X+Y+Z)}×100 is 90 or more
Requirement (b): an X/Y ratio is 10/90 to 75/25.

The alicyclic hydrocarbon group, the chain hydrocarbon group, and the aromatic hydrocarbon group are groups that may be selected as R¹ and R² in the general formula (B 1), and therefore the total of the values of X, Y, and Z is 2 molar equivalents per 1 mol of the compound represented by the general formula (B1). The values of the requirements (a) and (b) mean the average values for the total amount of the group of compounds represented by the general formula (B1) contained in the grease composition.

The use of the compound represented by the general formula (B1) that satisfies the requirements (a) and (b) can achieve the grease composition having an excellent wear resistance.

In the case where the compound represented by the general formula (B1) that does not satisfy the requirements (a) and (b) is used, the grease composition has an inferior wear resistance and is not suitable as a grease composition for a constant velocity joint.

The values of X, Y, and Z can be calculated from the molar equivalents of the amines used as starting materials for synthesizing the diurea compound represented by the general formula (B1).

The requirement (a) is preferably 95 or more, more preferably 98 or more, and further preferably 100, from the standpoint of the achievement of the grease composition having a further excellent wear resistance.

The requirement (b) is preferably 30/70 to 72/28, more preferably 35/65 to 70/30, further preferably 40/60 to 70/30, and still further preferably 55/45 to 65/35, from the same standpoint.

### (Requirements (I) and (II))

In the grease composition of the present invention, the grease composition further comprises particles formed through aggregation of the urea-based thickening agent (B), and a particle diameter distribution curve on a volume basis in a light scattering particle diameter measurement of the particles containing the urea-based thickening agent (B) has a peak with the maximum frequency that satisfies the following requirements (I) and (II).

Requirement (I): the particle diameter at the peak with the maximum frequency is 1.0 pm or less.

Requirement (II): the peak has a full width at half maximum of 1.0 pm or less.

The values specified in the requirements (I) and (II) are values that are calculated from the particle diameter distribution curve measured in the light scattering particle diameter measurement in the examples described later.

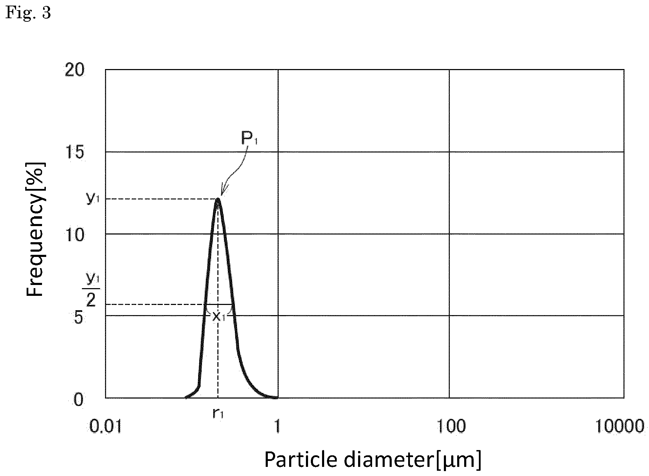

Fig. 3 shows an example of the particle diameter distribution curve based on a volume basis in a light scattering particle diameter measurement of the particles containing the urea-based thickening agent (B). In the particle diameter distribution curve shown in Fig. 3, the particle diameter r₁ of the peak P₁ with the maximum frequency y₁ that is 1.0 pm or less satisfies the requirement (I). The full width at half maximum x₁ of the peak P₁ that is 1.0 pm or less satisfies the requirement (II).

The requirements (I) and (II) are parameters that show the aggregation state of the urea-based thickening agent (B) in the grease composition.

The "particles containing the urea-based thickening agent (B)" to be measured herein mean particles formed through aggregation of the urea-based thickening agent (B), and also encompass particles having one or more kind of an additive selected from the component (C), the component (D), and the additional grease additive, incorporated through aggregation along with the urea-based thickening agent (B).

An aggregate that does not contain the urea-based thickening agent (B) but contains only one or more kind of an additive selected from the component (C), the component (D), and the additional grease additive is excluded from the "particles containing the urea-based thickening agent (B)". The term "excluded" herein means that the aggregate that contains only one or more kind of an additive selected from the component (C), the component (D), and the additional grease additive is significantly smaller in amount than "particles containing the urea-based thickening agent (B)", and is substantially not detected in the light scattering particle diameter measurement, and if detected, the amount thereof is in a negligible level.

The requirement (I) specifies that the particle diameter at the peak with the maximum frequency is 1.0 pm or less. The particle diameter can be understood as an index showing the degree of aggregation of the urea-based thickening agent (B).

In the case where the particle diameter is 1.0 pm or less, the aggregation of the urea-based thickening agent (B) can be appropriately suppressed, and the grease composition having excellent friction characteristics and a further excellent wear resistance can be obtained. The particle diameter at the peak with the maximum frequency specified in the requirement (I) is preferably 0.9 pm or less, more preferably 0.8 pm or less, and further preferably 0.6 pm or less, and is generally 0.01 pm or more, from the standpoint of the achievement of the grease composition having further excellent friction characteristics and a still further excellent wear resistance.

The particle diameter at the peak with the maximum frequency means the value of the particle diameter at the apex of the peak.

The requirement (II) specifies that the peak has a full width at half maximum of 1.0 pm or less. The full width at half maximum can be understood as an index showing the distribution state of the particles containing the urea-based thickening agent (B) that are larger than the particle diameter with the maximum frequency specified in the requirement (I).

The full width at half maximum specified in the requirement (II) means the spread width of the particle diameter at 50% of the maximum frequency in the requirement (I) in the particle diameter distribution curve on a volume basis by the light scattering particle diameter measurement of the particles.

Specifically, in the case where the full width at half maximum is 1.0 pm or less, the existing proportion of micelle particles of the urea-based thickening agent (B) that are excessively larger than the particle diameter specified in the requirement (I) is suppressed low, and the grease composition having excellent friction characteristics and a further excellent wear resistance can be obtained. The full width at half maximum specified in the requirement (II) is preferably 0.9 pm or less, more preferably 0.8 pm or less, and further preferably 0.6 pm or less, and is generally 0.01 pm or more, from the standpoint of the achievement of the grease composition having further excellent friction characteristics and a still further excellent wear resistance.

The values specified in the requirements (I) and (II) are relatively largely influenced by the production condition of the urea-based thickening agent (B) and the blending condition of the component (C), the component (D), and the additional grease additive.

Examples of the specific measure for preparing the grease composition to achieve the values specified in the requirements (I) and (II) include the procedure described in the section of "Production Method of Grease Composition" shown later.

In one embodiment of the present invention, the content of the urea-based thickening agent (B) may be determined depending on the worked penetration demanded for the grease composition for a constant velocity joint.

In the case where the grease composition of one embodiment of the present invention uses the particular compound represented by the general formula (B 1) as the urea-based thickening agent (B), the amount of the thickening agent used for controlling the worked penetration can be decreased as compared to the case where another urea-based thickening agent is used. In other words, in the case where the particular compound represented by the general formula (B1) is used as the urea-based thickening agent (B), the grease composition having a lower worked penetration can be obtained with a smaller content of the thickening agent as compared to the case where another urea-based thickening agent is used. Accordingly, there is an advantage that the grease composition having a lower worked penetration can be prepared at lower cost, and thus the grease composition obtained can address the cost reduction issue demanded for a grease for a constant velocity joint in recent years.

For example, the content of the urea-based thickening agent (B) is preferably 3.0 to 7.0% by mass, more preferably 3.5 to 6.5% by mass, and further preferably 4.0 to 6.0% by mass, from the standpoint that the grease composition for a constant velocity joint is controlled to have a suitable worked penetration therefor of, for example, preferably 220 to 385, more preferably 250 to 355, and further preferably 220 to 340.

As described above, the grease composition of one embodiment of the present invention can readily secure a sufficient worked penetration that is demanded for the grease composition for a constant velocity joint even though the amount of the urea-based thickening agent (B) is small.

### <Organic Molybdenum-based Compound (C)>

The grease composition of the present invention contains an organic molybdenum-based compound (C).

In the case where the grease composition contains an organic molybdenum-based compound (C), the grease composition can have good friction characteristics and a further excellent wear resistance.

The organic molybdenum-based compound (C) used in one embodiment of the present invention may be any organic compound that has a molybdenum atom, and is preferably a molybdenum dithiophosphate (MoDTP) or a molybdenum dithiocarbamate (MoDTC), and more preferably a molybdenum dithiocarbamate (MoDTC), from the standpoint of the achievement of the grease composition having better friction characteristics.

The organic molybdenum-based compound (C) may be used alone or as a combination of two or more kinds thereof.

### (Molybdenum Dithiophosphate (MoDTP))

The molybdenum dithiophosphate (MoDTP) is preferably a compound represented by the following general formula (C1-1) or a compound represented by the following general formula (C1-2).

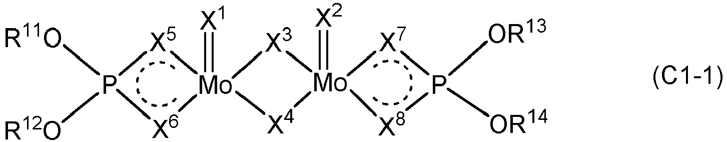

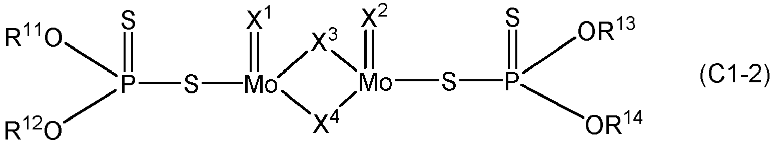

In the general formulae (C1-1) and (C1-2), R¹¹ to R¹⁴ each independently represent a hydrocarbon group. R¹¹ to R¹⁴ may be the same as or different from each other.

X¹ to X⁸ each independently represent an oxygen atom or a sulfur atom, and may be the same as or different from each other, provided that at least two of X¹ to X⁸ in the formula (C1-1) represent sulfur atoms.

In one embodiment of the present invention, in the general formula (C1-1), it is preferred that X¹ and X² represent oxygen atoms, and X³ to X⁸ represent sulfur atoms.

In the general formula (C1-1), the molar ratio of sulfur atoms and oxygen atoms (sulfur atom/oxygen atom) in X¹ to X⁸ is preferably 1/4 to 4/1, and more preferably 1/3 to 3/1, from the standpoint of the enhancement of the solubility in the base oil (A).

In the general formula (C1-2), it is preferred that X¹ and X² represent oxygen atoms, and X³ and X⁴ represent sulfur atoms.

In the general formula (C1-2), the molar ratio of sulfur atoms and oxygen atoms (sulfur atom/oxygen atom) in X¹ to X⁴ is preferably 1/3 to 3/1, and more preferably 1.5/2.5 to 2.5/1.5, from the same standpoint as above.

The number of carbon atoms of the hydrocarbon group that may be selected as R¹¹ to R¹⁴ is preferably 1 to 20, more preferably 5 to 18, further preferably 5 to 16, and still further preferably 5 to 12.

Specific examples of the hydrocarbon group that may be selected as R¹¹ to R¹⁴ include an alkyl group, such as a methyl group, an ethyl group, a propyl group, a butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, and an octadecyl group; an alkenyl group, such as an octenyl group, a nonenyl group, a decenyl group, an undecenyl group, a dodecenyl group, a tridecenyl group, a tetradecenyl group, and a pentadecenyl group; a cycloalkyl group, such as a cyclohexyl group, a dimethylcyclohexyl group, an ethylcyclohexyl group, a methylcyclohexylmethyl group, a cyclohexylethyl group, a propylcyclohexyl group, a butylcyclohexyl group, and a heptylcyclohexyl group; an aryl group, such as a phenyl group, a naphthyl group, an anthracenyl group, a biphenyl group, and a terphenyl group; an alkylaryl group, such as tolyl group, a dimethylphenyl group, a butylphenyl group, a nonylphenyl group, a methylbenzyl group, and dimethylnaphthyl group; and an arylalkyl group, such as a phenylmethyl group, a phenylethyl group, and a diphenylmethyl group.

### (Molybdenum Dithiocarbamate (MoDTC))

Examples of the molybdenum dithiocarbamate (MoDTC) include a two-nucleus molybdenum dithiocarbamate containing two molybdenum atoms in one molecule and a three-nucleus molybdenum dithiocarbamate containing three molybdenum atoms in one molecule, and a two-nucleus molybdenum dithiocarbamate is preferred.

The two-nucleus molybdenum dithiocarbamate is more preferably a compound represented by the following general formula (C2-1) and a compound represented by the following general formula (C2-2).

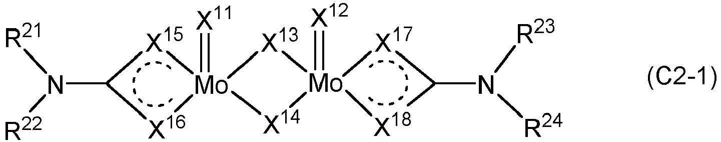

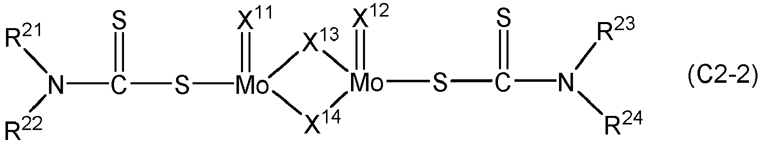

In the general formulae (C2-1) and (C2-2), R²¹ to R²⁴ each independently represent a hydrocarbon group, and may be the same as or different from each other.

X¹¹ to X¹⁸ each independently represent an oxygen atom or a sulfur atom, and may be the same as or different from each other, provided that at least one of X¹¹ to X¹⁸ in the formula (C2-1) represents a sulfur atom.

In one embodiment of the present invention, in the general formula (C2-1), it is preferred that X¹¹ and X¹² represent oxygen atoms, and X¹³ to X¹⁸ represent sulfur atoms.

In the general formula (C2-1), the molar ratio of sulfur atoms and oxygen atoms (sulfur atom/oxygen atom) in X¹¹ to X¹⁸ is preferably 1/4 to 4/1, and more preferably 1/3 to 3/1, from the standpoint of the enhancement of the solubility in the base oil (A).

In the general formula (C2-2), it is preferred that X¹¹ to X¹⁴ represent oxygen atoms.

The number of carbon atoms of the hydrocarbon group that may be selected as R²¹ to R²⁴ in the general formulae (C2-1) and (C2-2) is preferably 1 to 20, more preferably 5 to 18, further preferably 5 to 16, and still further preferably 5 to 13.

Specific examples of the hydrocarbon group that may be selected as R²¹ to R²⁴ include the same groups as in the hydrocarbon group that may be selected as R¹¹ to R¹⁴ in the general formulae (C1-1) and (C1-2).

### <Zinc Dithiophosphate (D)>

The grease composition of the present invention contains a zinc dithiophosphate (D).

In the case where the grease composition contains a zinc dithiophosphate (D), the grease composition can have good friction characteristics and can readily have a further excellent wear resistance.

Preferred examples of the zinc dithiophosphate (D) contained in the grease composition of one embodiment of the present invention include a compound represented by the following general formula (D1).

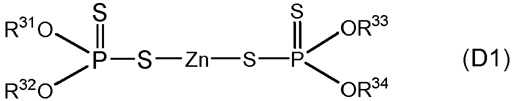

In the general formula (D1), R³¹ to R³⁴ each independently represent a hydrocarbon group. The hydrocarbon group may be any of monovalent hydrocarbon groups without particular limitation, and from the standpoint of the achievement of the grease composition having better friction characteristics, preferred examples thereof include an alkyl group, an alkenyl group, a cycloalkyl group, and an aryl group, in which an alkyl group and an aryl group are more preferred, and an alkyl group is further preferred. In other words, the zinc dithiophosphate (D) used in one embodiment of the present invention is preferably a zinc dialkyldithiophosphate or a zinc diaryldithiophosphate, and more preferably a zinc dialkyldithiophosphate.

The alkyl group and the alkenyl group represented by R³¹ to R³⁴ may be either linear or branched, and from the standpoint of the achievement of the grease composition having better friction characteristics, are preferably a primary or secondary group, in which a primary alkyl group and a secondary alkyl group are preferred, and a secondary alkyl group is more preferred. In other words, the zinc dialkyldithiophosphate used in one embodiment of the present invention is preferably a zinc primary dialkyldithiophosphate or a zinc secondary dialkyldithiophosphate, and more preferably a zinc secondary dialkyldithiophosphate.

The cycloalkyl group and the aryl group represented by R³¹ to R³⁴ may be a polycyclic group, such as a decalyl group and a naphthyl group.

The monovalent hydrocarbon group that may be selected as R³¹ to R³⁴ may be a group having a substituent containing an oxygen atom and/or a nitrogen atom, such as a hydroxy group, a carboxy group, an amino group, an amide group, a nitro group, and a cyano group, or a group partially substituted by a nitrogen atom, an oxygen atom, a halogen atom, and the like, and in the case where the monovalent hydrocarbon group is a cycloalkyl group or an aryl group, may further have a substituent, such as an alkyl group and an alkenyl group.

From the standpoint of the achievement of the grease composition having further better friction characteristics, the number of carbon atoms of the hydrocarbon group represented by R³¹ to R³⁴ in the case where the monovalent hydrocarbon group is an alkyl group is preferably 1 or more, more preferably 2 or more, and further preferably 3 or more, and the upper limit thereof is preferably 24 or less, more preferably 18 or less, and further preferably 12 or less.

In the case where the monovalent hydrocarbon group is an alkenyl group, the number of carbon atoms thereof is preferably 2 or more, and more preferably 3 or more, and the upper limit thereof is preferably 24 or less, more preferably 18 or less, and further preferably 12 or less.

In the case where the monovalent hydrocarbon group is a cycloalkyl group, the number of carbon atoms thereof is preferably 5 or more, and the upper limit thereof is preferably 20 or less.

In the case where the monovalent hydrocarbon group is an aryl group, the number of carbon atoms thereof is preferably 6 or more, and the upper limit thereof is preferably 20 or less.

### <Contents and Content Ratio of Organic Molybdenum-based Compound (C) and Zinc Dithiophosphate (D)>

### (Content of Organic Molybdenum-based Compound (C))

In the grease composition of one embodiment of the present invention, the content of the organic molybdenum-based compound (C) is preferably 0.01 to 5.0% by mass, more preferably 0.1 to 5.0% by mass, further preferably 0.2 to 3.0% by mass, and still further preferably 0.5 to 3.0% by mass, based on the total amount (100% by mass) of the grease composition, from the standpoint of the achievement of the grease composition having good friction characteristics.

In the grease composition of one embodiment of the present invention, the content of the organic molybdenum-based compound (C) in terms of molybdenum atom is preferably 0.0005 to 0.2000 ppm by mass, more preferably 0.01 to 0.15 ppm by mass, and further preferably 0.02 to 0.15 ppm by mass, based on the total amount (100% by mass) of the grease composition.

In the description herein, the content of molybdenum atom means a value that is measured according to JPI-5S-38-03.

### (Content of Zinc Dithiophosphate (D))

In the grease composition of one embodiment of the present invention, the content of the zinc dithiophosphate (D) is preferably 0.02 to 6.0% by mass, more preferably 0.2 to 5.0% by mass, further preferably 0.4 to 4.0% by mass, and still further preferably 0.5 to 3.0% by mass, based on the total amount (100% by mass) of the grease composition, from the standpoint of the achievement of the grease composition having good friction characteristics.

In the grease composition of one embodiment of the present invention, the content of the zinc dithiophosphate (D) in terms of zinc atom is preferably 0.1 to 3.0 ppm by mass, more preferably 0.5 to 2.5 ppm by mass, and further preferably 0.7 to 2.0 ppm by mass, based on the total amount (100% by mass) of the grease composition.

In the description herein, the content of zinc atom means a value that is measured according to JPI-5S-38-03.

### (Content Ratio of Organic Molybdenum-based Compound (C) and Zinc Dithiophosphate (D))

In the grease composition of one embodiment of the present invention, the content ratio of the organic molybdenum-based compound (C) and the zinc dithiophosphate (D) (organic molybdenum-based compound (C)/zinc dithiophosphate (D)) in terms of mass ratio is preferably 1/5 to 4, more preferably 1/3 to 2, and further preferably 1/3 to 1.

In the grease composition of one embodiment of the present invention, the content ratio of the molybdenum (Mo) derived from the organic molybdenum-based compound (C) and the zinc atom (Zn) derived from the zinc dithiophosphate (D) (Mo/Zn) in terms of mass ratio is preferably 0.1 to 1.0, more preferably 0.1 to 0.5, and further preferably 0.15 to 0.30.

### <Additional Grease Additive>

The grease composition of one embodiment of the present invention may contain a grease additive other than the components (C) and (D) that is blended with an ordinary grease, in such a range that does not impair the effects of the present invention.

Examples of the grease additive include an antioxidant, a rust inhibitor, an extreme pressure agent, a thickening agent, a solid lubricant, a detergent dispersant, a corrosion inhibitor, and a metal deactivator.

These grease additives may be used alone or may be used in combination of two or more thereof.

Examples of the antioxidant include a phenol-based antioxidant, an amine-based antioxidant, and a sulfur-based antioxidant.

Examples of the rust inhibitor include a carboxylic acid-based rust inhibitor, such as an alkenyl succinic acid polyhydric alcohol ester, zinc stearate, thiadiazole and a derivative thereof, and benzotriazole and a derivative thereof.

Examples of the extreme pressure agent include a thiocarbamic acid, such as an ashless dithiocarbamate and zinc dithiocarbamate; a sulfur compound, such as sulfurized oil and fat, a sulfidized olefin, a polysulfide, a thiophosphoric acid compound, a thioterpene compound, and a dialkyl thiodipropionate compound; a phosphate ester, such as tricresyl phosphate; and a phosphite ester, such as triphenyl phosphite.

Examples of the thickening agent include a polymethacrylate (PMA), an olefin copolymer (OCP), a polyalkylstyrene (PAS), and a styrene-diene copolymer (SCP).

Examples of the solid lubricant include a polyimide, PTFE, graphite, a metal oxide, boron nitride, melamine cyanurate (MCA), and molybdenum disulfide.

Examples of the detergent dispersant include an ashless dispersant, such as non-boronated succinimide and boronated succinimide.

Examples of the corrosion inhibitor include a benzotriazole-based compound and a thiazole-based compound.

Examples of the metal deactivator include a benzotriazole-based compound.

In the grease composition of one embodiment of the present invention, the contents of the grease additives each may be appropriately set according to the kind of the additive, and each independently is generally 0 to 10% by mass, preferably 0 to 7% by mass, more preferably 0 to 5% by mass, and further preferably 0 to 2% by mass, based on the total amount (100% by mass) of the grease composition.

### [Production Method of Grease Composition]

In the following description, a grease composition that contains the base oil (A) and the urea-based thickening agent (B) represented by the general formula (B 1), before the addition of one or more kind of the additive selected from the component (C), the component (D), and the additional grease additive may be referred to as a "base grease".

The method for producing the grease composition of the present invention is not particularly limited, and examples thereof include a production method including the following step (1).

Step (1): a step of blending a raw material of the urea-based thickening agent (B) represented by the general formula (B1) with the base oil (A), and synthesizing the urea-based thickening agent (B), so as to provide a base grease.

One or more kind of the additive selected from the component (C), the component (D), and the additional grease additive may be added during the preparation of the base grease through the step (1), or may be added after the preparation of the base grease through the step (1).

The step (1) may be specifically performed, for example, in the following procedure.

### <Step (1)>

In the case where the urea-based thickening agent (B) represented by the general formula (B1), the urea-based thickening agent (B) represented by the general formula (B1) can be synthesized in such a manner that a solution β obtained by dissolving a monoamine in the base oil (A) is added to a heated solution α obtained by dissolving an isocyanate compound in the base oil (A), so as to react the isocyanate compound and a monoamine. According to the procedure, the base grease is obtained. A grease composition obtained by adding one or more kind of the additive selected from the component (C), the component (D), and the additional grease additive to the base grease is preferably subjected, after cooling, to a milling treatment with a colloid mill, a roll mill, or the like.

Examples of the method for preparing the grease composition to provide the particle diameter distribution of the particles containing the urea-based thickening agent (B) that satisfies the requirements (I) and (II) include the following method.

### <Production Method of Grease Composition satisfying Requirements (I) and (II)> (Apparatus)

From the standpoint of dispersing the urea-based thickening agent (B) in the grease composition to satisfy the requirements (I) and (II), it is preferred that the base grease is prepared by using a grease manufacturing apparatus shown in the following item [1], and the grease composition is produced therewith.
[1] A grease manufacturing apparatus including a container body having an introduction portion for introducing a grease raw material, and a discharge portion for discharging the base grease to the outside; and
   a rotor having a rotation axis in the axial direction of the inner periphery of the container body, rotatably provided inside the container body,
   the rotor including a first concave-convex portion having
      (i) concaves and convexes that are alternately provided along the surface of the rotor, the concaves and convexes being inclined to the rotation axis, and
      (ii) a feeding capability from the introduction portion to the direction toward the discharge portion.

In the following description for the grease manufacturing apparatus in the item [1], the description that is referred to be "preferred" is an embodiment from the standpoint that the urea-based thickening agent (B) is dispersed in the grease composition to satisfy the requirements (I) and (II), unless otherwise indicated.

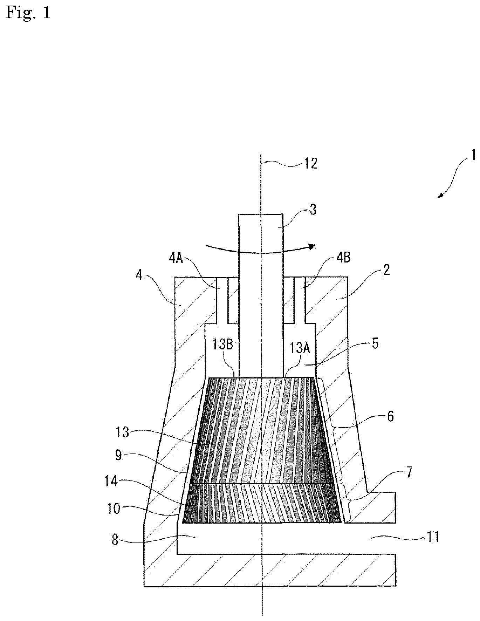

Fig. 1 is a schematic cross sectional view of the grease manufacturing apparatus shown in the item [1] that can be used in one embodiment of the present invention.

A grease manufacturing apparatus 1 shown in Fig. 1 includes a container body 2 for introducing a grease raw material into the inside thereof, and a rotor 3 having a rotation axis 12 on a center axis line of an inner periphery of the container body 2 and rotating around the rotation axis 12 as a center axis.

The rotor 3 rotates at high speed around the rotation axis 12 as the center axis to apply a high shearing force to the grease raw material inside the container body 2. According to the procedure, the base grease containing the urea-based thickening agent (B) is produced.

As shown in Fig. 1, the container body 2 is preferably partitioned to an introduction portion 4, a retention portion 5, a first inner peripheral surface 6, a second inner peripheral surface 7, and a discharge portion 8 in this order from an upstream side.

As shown in Fig. 1, it is preferred that the container body 2 has an inner peripheral surface forming such a truncated cone shape that the inner diameter thereof gradually increases from the introduction portion 4 toward the discharge portion 8.

The introduction portion 4 as one end of the container body 2 has plural solution introducing pipes 4A and 4B for introducing the grease raw material from the outside of the container body 2.

The retention portion 5 is disposed in the downstream portion of the introduction portion 4, and is a space for temporarily retaining the grease raw material introduced from the introduction portion 4. When the grease raw material is retained in the retention portion 5 for a long period of time, the base grease adhered to the inner peripheral surface of the retention portion 5 forms large lumps, and therefore it is preferred to transport the grease raw material to the first inner peripheral surface 6 in the downstream side in a short period of time as far as possible. It is more preferred that the grease raw material is transported directly to the first inner peripheral surface 6 without passing through the retention portion 5.

The first inner peripheral surface 6 is disposed in the downstream portion adjacent to the retention portion 5, and the second inner peripheral surface 7 is disposed in the downstream portion adjacent to the first inner peripheral surface 6. As described later in detail, it is preferred to provide a first concave-convex portion 9 on the first inner peripheral surface 6 and to provide a second concave-convex portion 10 on the second inner peripheral surface 7, for the purpose of allowing the first inner peripheral surface 6 and the second inner peripheral surface 7 to function as a high shearing portion for imparting a high shearing force to the grease raw material or the base grease.

The discharge portion 8 as the other end of the container body 2 is a part for discharging the base grease stirred on the first inner peripheral surface 6 and the second inner peripheral surface 7, and has a discharge port 11 for discharging the base grease. The discharge port 11 is formed in a direction orthogonal or approximately orthogonal to the rotation axis 12. Accordingly, the base grease is discharged from the discharge port 11 to the direction orthogonal or approximately orthogonal to the rotation axis 12. However, the discharge port 11 may not necessarily be orthogonal to the rotation axis 12, and may be formed in a direction in parallel or in approximately parallel to the rotation axis 12.

The rotor 3 is rotatably provided on the center axis line of the inner peripheral surface of the container body 2, which has a truncated cone shape, as a rotation axis 12, and rotates counterclockwise in viewing the container body 2 from the upstream portion toward the downstream portion as shown in Fig. 1.

The rotor 3 has an outer peripheral surface that expands in accordance with the enlargement of the inner diameter of the truncated cone of the container body 2, and the outer peripheral surface of the rotor 3 and the inner peripheral surface of the truncated cone of the container body 2 are maintained at a constant interval.

The outer peripheral surface of the rotor 3 has a first concave-convex portion 13 of the rotor having concaves and convexes alternately provided along the surface of the rotor 3.

The first concave-convex portion 13 of the rotor is inclined to the rotation axis 12 of the rotor 3 in the direction of from the introduction portion 4 toward the discharge portion 8, and has a feeding capability in the direction of from the introduction portion 4 toward the discharge portion 8. Accordingly, the first concave-convex portion 13 of the rotor is inclined in the direction of pushing the solution toward the downstream side when the rotor 3 rotates in the direction shown in Fig. 1.

The step between the concave portion 13A and the convex portion 13B of the first concave-convex portion 13 of the rotor is preferably 0.3 to 30, more preferably 0.5 to 15, and further preferably 2 to 7, assuming that the diameter of the concave portion 13A on the outer peripheral surface of the rotor 3 is 100.

The number of the convex portions 13B of the first concave-convex portion 13 of the rotor in the circumferential direction is preferably 2 to 1,000, more preferably 6 to 500, and further preferably 12 to 200.

The ratio of the width of the convex portion 13B to the width of the concave portion 13A of the first concave-convex portion 13 of the rotor (width of the convex portion/width of the concave portion) in the cross section orthogonal to the rotation axis 12 of the rotor 3 is preferably 0.01 to 100, more preferably 0.1 to 10, and further preferably 0.5 to 2.

The inclination angle of the first concave-convex portion 13 of the rotor with respect to the rotation axis 12 is preferably 2 to 85°, more preferably 3 to 45°, and further preferably 5 to 20°.

It is preferred that the first inner peripheral surface 6 of the container body 2 has the first concave-convex portion 9 having plural concaves and convexes along the inner peripheral surface thereof.

It is preferred that the concaves and convexes of the first concave-convex portion 9 on the side of the container body are inclined in the opposite direction to the first concave-convex portion 13 of the rotor.

Accordingly, it is preferred that the plural concaves and convexes of the first concave-convex portion 9 on the side of the container body are inclined in the direction of pushing the solution toward the downstream side when the rotation axis 12 of the rotor 3 rotates in the direction shown in Fig. 1. The stirring capability and the discharge capability are further enhanced by the first concave-convex portion 9 having the plural concaves and convexes provided on the first inner peripheral surface 6 of the container body 2.

The depth of the concaves and convexes of the first concave-convex portion 9 on the side of the container body is preferably 0.2 to 30, more preferably 0.5 to 15, and further preferably 1 to 5, assuming that the inner diameter (diameter) of the container is 100.

The number of the concaves and convexes of the first concave-convex portion 9 on the side of the container body is preferably 2 to 1,000, more preferably 6 to 500, and further preferably 12 to 200.

The ratio of the width of the concave portion to the width of the convex portion between the grooves in the concaves and convexes of the first concave-convex portion 9 on the side of the container body (width of the concave portion/width of the convex portion) is preferably 0.01 to 100, more preferably 0.1 to 10, and further preferably 0.5 to 2 or less.

The inclination angle of the concaves and convexes of the first concave-convex portion 9 on the side of the container body to the rotation axis 12 is preferably 2 to 85°, more preferably 3 to 45°, and further preferably 5 to 20°.

With the first concave-convex portion 9 provided on the first inner peripheral surface 6 of the container body, the first inner peripheral surface 6 can function as a high shearing portion for imparting a high shearing force to the grease raw material or the base grease, but the first concave-convex portion 9 may not necessarily be provided.

It is preferred that a second concave-convex portion 14 of a rotor having concaves and convexes alternately provided along the surface of the rotor 3 is provided on the outer peripheral surface of the downstream portion of the first concave-convex portion 13 of the rotor.

The second concave-convex portion 14 of the rotor is inclined to the rotation axis 12 of the rotor 3, and has a feed suppressing capability to push back the solution toward the upstream side from the introduction portion 4 toward the discharge portion 8.

The step of the second concave-convex portion 14 of the rotor is preferably 0.3 to 30, more preferably 0.5 to 15, and further preferably 2 to 7, assuming that the diameter of the concave portion of the outer peripheral surface of the rotor 3 is 100.

The number of the convex portions of the second concave-convex portion 14 of the rotor in the circumferential direction is preferably 2 to 1,000, more preferably 6 to 500, and further preferably 12 to 200.

The ratio of the width of the convex portion to the width of the concave portion of the second concave-convex portion 14 of the rotor in the cross section orthogonal to the rotation axis of the rotor 3 (width of the convex portion/width of the concave portion) is preferably 0.01 to 100, more preferably 0.1 to 10, and further preferably 0.5 to 2.

The inclination angle of the second concave-convex portion 14 of the rotor to the rotation axis 12 is preferably 2 to 85°, more preferably 3 to 45°, and further preferably 5 to 20°.

It is preferred that the second inner peripheral surface 7 of the container body 2 has the second concave-convex portion 10 formed having plural concaves and convexes adjacent to the downstream portion of the concaves and convexes in the first concave-convex portion 9 on the side of the container body.

It is preferred that the plural concaves and convexes of the second concave-convex portion 10 on the side of the container body are formed on the inner peripheral surface of the container body 2, and the concaves and convexes are inclined in the opposite direction to the inclination direction of the second concave-convex portion 14 of the rotor.

Accordingly, it is preferred that the plural concaves and convexes of the second concave-convex portion 10 on the side of the container body are inclined in the direction of pushing back the solution toward the upstream side when the rotation axis 12 of the rotor 3 rotates in the direction shown in Fig. 1. The stirring capability is further enhanced by the concaves and convexes of the second concave-convex portion 10 provided on the second inner peripheral surface 7 of the container body 2. Furthermore, the second inner peripheral surface 7 of the container body 2 can function as a high shearing portion for imparting a high shearing force to the grease raw material or the base grease.

The depth of the concave portions of the second concave-convex portion 10 on the side of the container body is preferably 0.2 to 30, more preferably 0.5 to 15, and further preferably 1 to 5, assuming that the inner diameter (diameter) of the container body is 100.

The number of the concave portions of the second concave-convex portion 10 on the side of the container body is preferably 2 to 1,000, more preferably 6 to 500, and further preferably 12 to 200.

The ratio of the width of the convex portion of the concaves and convexes of the second concave-convex portion 10 on the side of the container body to the width of the concave portion in the cross section orthogonal to the rotation axis 12 of the rotor 3 (width of the convex portion/width of the concave portion) is preferably 0.01 to 100, more preferably 0.1 to 10, and further preferably 0.5 to 2 or less.

The inclination angle of the second concave-convex portion 10 on the side of the container body to the rotation axis 12 is preferably 2 to 85°, more preferably 3 to 45°, and further preferably 5 to 20°.

The ratio of the length of the first concave-convex portion 9 on the side of the container body to the length of the second concave-convex portion 10 on the side of the container body (length of the first concave-convex portion/length of the second concave-convex portion) is preferably 2/1 to 20/1.

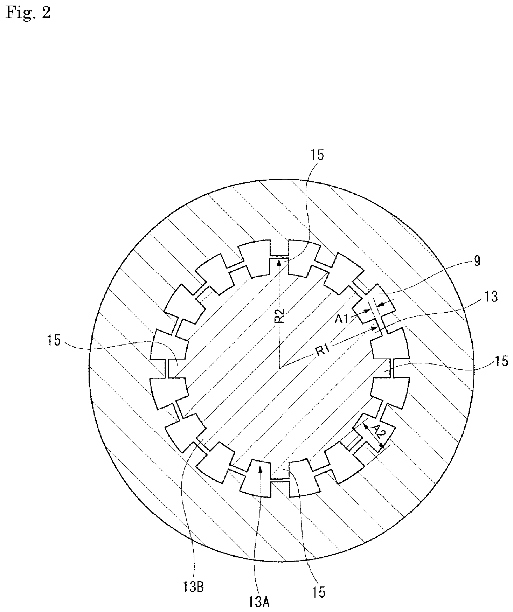

Fig. 2 is a cross-sectional view in the horizontal direction of the first concave-convex portion 9 on the side of the container body of the grease manufacturing apparatus 1.

The first concave-convex portion 13 shown in Fig. 2 has plural scrapers 15 each having a tip protruding toward the inner peripheral surface side of the container body 2 beyond the tip in the projecting direction of the convex portion 13B of the first concave-convex portion 13. While not shown in the figure, the second concave-convex portion 14 also has plural scrapers each having a tip of the convex portion protruding toward the inner peripheral surface side of the container body 2, as similar to the first concave-convex portion 13.

The scraper 15 scrapes off the base grease adhered to the inner peripheral surface of the first concave-convex portion 9 on the side of the container body and the second concave-convex portion 10 on the side of the container body.

The protrusion amount of the tip of the scraper 15 with respect to the projecting amount of the convex portion 13B of the first concave-convex portion 13 of the rotor in terms of the ratio (R2/R1) of the radius (R2) of the tip of the scraper 15 to the radius (R1) of the tip of the convex portion 13B is preferably more than 1.005 and less than 2.0.

The number of scrapers 15 is preferably 2 to 500, more preferably 2 to 50, and further preferably 2 to 10.

In the grease manufacturing apparatus 1 shown in Fig. 2, the scraper 15 is provided, but may not be provided, or may be provided intermittently.

In the production of the base grease containing the urea-based thickening agent (B) with the grease manufacturing apparatus 1, the solution α and the solution β as the grease raw materials are introduced from the solution introducing pipes 4A and 4B respectively of the introduction portion 4 of the container body 2, and the rotor 3 is rotated at a high speed, whereby the base grease base containing the urea-based thickening agent (B) can be produced.

Accordingly, the urea-based thickening agent (B) can be dispersed in the grease composition to satisfy the requirements (I) and (II) even though one or more kind of the additive selected from the component (C), the component (D), and the additional grease additive is blended with the resulting base grease to prepare the grease composition.

As for the high-speed rotation condition of the rotor 3, the shear rate applied to the grease raw material is preferably 10² s⁻¹ or more, more preferably 10³ s⁻¹ or more, and further preferably 10⁴ s⁻¹ or more, and is generally 10⁷ s⁻¹ or less.

The ratio of the maximum shear rate (Max) to the minimum shear rate (Min) (Max/Min) in the shearing in the high-speed rotation of the rotor 3 is preferably 100 or less, more preferably 50 or less, and further preferably 10 or less.

In the case where the shear rate to the mixed solution is as uniform as possible, the dispersion state of the thickening agent or a precursor thereof can be improved, and a uniform grease structure can be obtained.

The maximum shear rate (Max) herein is the highest shear rate applied to the mixed solution, and the minimum shear rate (Min) is the lowest shear rate applied to the mixed solution, which are defined as follows.

Maximum shear rate (Max) = (linear velocity at tip of convex portion 13B of first concave-convex portion 13 of rotor)/(gap A1 between tip of convex portion 13B of first concave-convex portion 13 of rotor and convex portion of first concave-convex portion 9 of first inner peripheral surface 6 of container body)

Minimum shear rate (Min) = (linear velocity of concave portion 13A of first concave-convex portion 13 of rotor)/(gap A2 between concave portion 13A of first concave-convex portion 13 of rotor and concave portion of first concave-convex portion 9 on first inner peripheral surface 6 of container body)

The gap A1 and the gap A2 are as shown in Fig. 2.

The grease manufacturing apparatus 1 has the scraper 15, with which the base grease adhered to the inner peripheral surface of the container body 2 can be scraped off, so that the generation of lumps during kneading can be prevented, and the base grease having the urea-based thickening agent (B) highly dispersed therein can be continuously produced in a short period of time.

Furthermore, since the scraper 15 scrapes off the adhered base grease, the retained base grease can be prevented from resisting the rotation of the rotor 3, so that the rotational torque of the rotor 3 can be reduced, and the power consumption of the drive source can be reduced to enable the continuous efficient production of the base grease.

Since the inner peripheral surface of the container body 2 is in a shape of a truncated cone having an inner diameter increasing from the introduction portion 4 toward the discharge portion 8, the centrifugal force has an effect for discharging the base grease or the grease raw material in the downstream direction, and the rotation torque of the rotor 3 can be reduced to enable the continuous production of the base grease.

Since the first concave-convex portion 13 of the rotor is provided on an outer peripheral surface of the rotor 3, the first concave-convex portion 13 of the rotor is inclined to the rotation axis 12 of the rotor 3 and has a feeding capability from the introduction portion 4 to the discharge portion 8, and the second concave-convex portion 14 of the rotor is inclined to the rotation axis 12 of the rotor 3 and has a feeding suppression capability from the introduction portion 4 to the discharge portion 8, a high shear force can be applied to the solution, and thus the urea-based thickening agent (B) can be dispersed in the grease composition to satisfy the requirements (I) and (II) even after blending the additives.

Since the first concave-convex portion 9 is formed on the first inner peripheral surface 6 of the container body and is inclined in the opposite direction to the first concave-convex portion 13 of the rotor, the grease raw material can be sufficiently stirred while extruding the base grease or the grease raw material in the downstream direction, in addition to the effect of the first concave-convex portion 13 of the rotor, and thus the urea-based thickening agent (B) can be dispersed in the grease composition to satisfy the requirements (I) and (II) even after blending the additives.

The second concave-convex portion 10 is provided on the second inner peripheral surface 7 of the container body, and the second concave-convex portion 14 of the rotor is provided on the outer peripheral surface of the rotor 3, whereby the grease raw material can be prevented from flowing out from the first inner peripheral surface 6 of the container body more than necessary, and thus the urea-based thickening agent (B) can be dispersed in the grease composition to satisfy the requirements (I) and (II) even after blending the additives through application of a high shear force to the solution to disperse highly the grease raw material.

### [Properties of Grease Composition]

### <Worked Penetration>

The worked penetration at 25°C of the grease composition of one embodiment of the present invention is preferably 220 to 385, more preferably 250 to 355, and further preferably 265 to 340, from the standpoint of the achievement of the grease composition having an excellent wear resistance.

The worked penetration means a value that is measured at 25°C according to JIS K2220 7:2013.

### <Wear Track Diameter and Friction Coefficient measured by Oscillation Friction and Wear Test (SRV Test)>

The wear track diameter measured by the SRV test of the grease composition of one embodiment of the present invention is preferably 0.630 mm or less, more preferably 0.625 mm or less, further preferably 0.620 mm or less, still further preferably 0.615 mm or less, and still more further preferably 0.610 mm or less.

The friction coefficient measured by the SRV test (load: 35 N) of the grease composition of one embodiment of the present invention is preferably 0.150 or less, more preferably 0.130 or less, further preferably 0.100 or less, still further preferably 0.080 or less, and still more further preferably 0.060 or less.

The friction coefficient measured by the SRV test (load: 200 N) of the grease composition of one embodiment of the present invention is preferably 0.170 or less, more preferably 0.140 or less, further preferably 0.100 or less, still further preferably 0.080 or less, and still more further preferably 0.060 or less.

With a smaller wear track diameter and a lower friction coefficient, the grease composition can be understood to have good friction characteristics and an excellent wear resistance.

Furthermore, the grease composition exhibits no large difference in friction coefficient between the low load and the high load in the SRV test, and thus can be understood to be significantly suitable as a grease composition used for the lubrication of a rolling sliding portion of a constant velocity joint, which tends to receive a high load.

The SRV test can be performed by the method shown in the examples described later according to ASTM D5706.

### [Use Method of Grease Composition (Lubrication Method)]

The grease composition of the present invention may be applied to a constant velocity joint.

A constant velocity joint receives a high surface pressure in rotating, simultaneously receives a complex rolling sliding action therein. Therefore, the rolling sliding portion of the constant velocity joint tends to receive a heavy load. Furthermore, in preparation for the enhancement of the performance, the silence, the ride quality, and the like of automobiles, and for the enhancement of the performance, the silence, the accuracy, and the like of general industrial machines, in recent years, there are severer demands for decreasing the vibration and prolonging the lifetime of a constant velocity joint, providing the situation that the wear of the constant velocity joint more likely tends to occur.

The grease composition of the present invention has an excellent wear resistance, and thus even for a joint used under severe condition, such as a constant velocity joint, can efficiently lubricate to suppress wear, so as to enhance the durability of the constant velocity joint.

Accordingly, in one embodiment of the present invention, a method for applying the grease composition of the present invention to a constant velocity joint is provided.

In one embodiment of the present invention, a method for lubricating a constant velocity joint with the grease composition of the present invention is also provided.

### [Constant Velocity Joint and Constant Velocity Joint Structure]

The grease composition of the present invention may be applied to a constant velocity joint.

Accordingly, in one embodiment of the present invention, a constant velocity joint including the grease composition of the present invention filled therein is provided.

In one embodiment of the present invention, a constant velocity joint structure including a constant velocity joint and the grease composition of the present invention, both of which are sealed with a boot.

### Examples

The present invention will be specifically described with reference to examples below. However, the present invention is not limited to the following examples.

The measurement methods for the property values in the examples will be described below.

### [Measurement Methods of Property Values]

### (1) Kinematic Viscosity at 40°C, Kinematic Viscosity at 100°C, and Viscosity Index

These values were measured and calculated according to JIS K2283:2000.

### (2) Worked Penetration

The value was measured at 25°C according to JIS K2220 7:2013.

### (3) Particle Diameter Distribution of Urea-based Thickening Agent

The grease composition produced in the production example describe later was defoamed in vacuum and then charged in a 1 mL syringe, and 0.10 to 0.15 mL of the grease composition was extruded from the syringe and placed on a surface of a plate cell of a paste cell fixture.

Subsequently, another plate cell was placed on the grease composition to provide a measurement cell of the grease composition held between the two cells.

A particle diameter distribution curve on a volume basis of the particles containing the urea-based thickening agent in the grease composition in the measurement cell was obtained with a laser diffraction particle diameter analyzer (LA-920, trade name, produced by Horiba, Ltd.) as a light scattering particle diameter measurement apparatus.

In the particle diameter distribution curve, the peak with the maximum frequency was specified, and the value of the particle diameter at the peak with the maximum frequency specified in the requirement (I) and the full width at half maximum of the peak specified in the requirement (II) were calculated.

### [Production Examples]

The production methods of the base greases of Example 1 and Comparative Examples 1 to 3 and the grease compositions of Examples 2 to 5 will be shown below.

### <Production Example 1>

As the base oil (A), a mixed base oil obtained by mixing 597.8 g of the following base oil 1 and 290.0 g of the following base oil 2 was used.

Base oil 1: paraffin-based mineral oil, kinematic viscosity at 40°C: 90.51 mm²/s, kinematic viscosity at 100°C: 10.89 mm²/s, viscosity index: 107

Base oil 2: paraffin-based mineral oil, kinematic viscosity at 40°C: 408.80 mm²/s, kinematic viscosity at 100°C: 30.86 mm²/s, viscosity index: 105

In a 1 L metal vessel, as a reaction tank, 375.5 g of the base oil (A) and 24.5 g (0.098 mmol) of diphenylmethane-4,4'-diisocyanate (MDI) were added and dissolved under heating to prepare a solution α.

In another 1 L metal vessel, 368.3 g of the base oil (A), 11.3 g (0.114 mmol) of cyclohexylamine (Cy), and 20.4 g (0.076 mmol) of stearylamine (C 18) were added to prepare a solution β.

To the reaction tank having the solution α therein, the solution β was added under heating, and the mixture was stirred until uniform. 200.0 g of the base oil (A) was added to the metal vessel that had housed the solution β and sufficiently stirred, and the solution β remaining in the metal vessel was added to the reaction tank, followed by stirring the reaction liquid in the reaction tank.

The reaction liquid was heated to 90°C or more and then retained for 1 hour to complete the reaction, thus synthesizing the urea-based thickening agent (B) represented by the general formula (B1), and the reaction liquid was treated with a three-stage roll mill to provide a base grease X1 (Example 1).

The urea-based thickening agent (B) in the base grease X1 corresponds to the diurea compound represented by the general formula (B1), in which R¹ and R² are selected from a cyclohexyl group and a stearyl group, and R³ is a diphenylmethylene group.

The value of {(X+Y)/(X+Y+Z)}×100 specified in the requirement (a) is 100, and the X/Y ratio specified in the requirement (b) is 60/40.

### <Production Example 2>

As the base oil (A), a mixed base oil obtained by mixing 549.0 g of the base oil 1 and 290.0 g of the base oil 2 was used.

In a 1 L metal vessel, as a reaction tank, 309.0 g of the base oil (A) and 91 g (0.364 mmol) of diphenylmethane-4,4'-diisocyanate (MDI) were added and dissolved under heating to prepare a solution α.

In another 1 L metal vessel, 330.0 g of the base oil (A) and 70.0 g (0.706 mmol) of cyclohexylamine (Cy) were added to prepare a solution β.

To the reaction tank having the solution α therein, the solution β was added under heating, and the mixture was stirred until uniform. 200.0 g of the base oil (A) was added to the metal vessel that had housed the solution β and sufficiently stirred, and the solution β remaining in the metal vessel was added to the reaction tank, followed by stirring the reaction liquid in the reaction tank.

The urea-based thickening agent (B) was synthesized in the same manner as in Example 1, and the reaction liquid was treated with a three-stage roll mill to provide a base grease X2 (Comparative Example 1).

The urea-based thickening agent (B) in the base grease X2 corresponds to the diurea compound represented by the general formula (B1), in which R¹ and R² are cyclohexyl groups, and R³ is a diphenylmethylene group.

The value of {(X+Y)/(X+Y+Z)}×100 specified in the requirement (a) is 100, and the X/Y ratio specified in the requirement (b) is 100/0.

### <Production Example 3>

As the base oil (A), a mixed base oil obtained by mixing 639.8 g of the base oil 1 and 290.0 g of the base oil 2 was used.

In a 1 L metal vessel, as a reaction tank, 365.0 g of the base oil (A) and 35.0 g (0.140 mmol) of diphenylmethane-4,4'-diisocyanate (MDI) were added and dissolved under heating to prepare a solution α.

In another 1 L metal vessel, 363.9 g of the base oil (A), 21.5 g (0.217 mmol) of cyclohexylamine (Cy), and 14.6 g (0.054 mmol) of stearylamine (C18) were added to prepare a solution β.

To the reaction tank having the solution α therein, the solution β was added under heating, and the mixture was stirred until uniform. 200.0 g of the base oil (A) was added to the metal vessel that had housed the solution β and sufficiently stirred, and the solution β remaining in the metal vessel was added to the reaction tank, followed by stirring the reaction liquid in the reaction tank.

The urea-based thickening agent (B) was synthesized in the same manner as in Example 1, and the reaction liquid was treated with a three-stage roll mill to provide a base grease X3 (Comparative Example 2).

The urea-based thickening agent (B) in the base grease X3 corresponds to the diurea compound represented by the general formula (B1), in which R¹ and R² are selected from a cyclohexyl group and a stearyl group, and R³ is a diphenylmethylene group.

The value of {(X+Y)/(X+Y+Z)}×100 specified in the requirement (a) is 100, and the X/Y ratio specified in the requirement (b) is 80/20.

### <Production Example 4>

As the base oil (A), a mixed base oil obtained by mixing 562.1 g of the base oil 1 and 290.0 g of the base oil 2 was used.

In a 1 L metal vessel, as a reaction tank, 352.1 g of the base oil (A) and 47.9 g (0.191 mmol) of diphenylmethane-4,4'-diisocyanate (MDI) were added and dissolved under heating to prepare a solution α.

In another 1 L metal vessel, 300.0 g of the base oil (A) and 100.0 g (0.371 mmol) of stearylamine (C18) were added to prepare a solution β.

To the reaction tank having the solution α therein, the solution β was added under heating, and the mixture was stirred until uniform. 200.0 g of the base oil (A) was added to the metal vessel that had housed the solution β and sufficiently stirred, and the solution β remaining in the metal vessel was added to the reaction tank, followed by stirring the reaction liquid in the reaction tank.

The urea-based thickening agent (B) was synthesized in the same manner as in Example 1, and the reaction liquid was treated with a three-stage roll mill to provide a base grease X4 (Comparative Example 4).

The urea-based thickening agent (B) in the base grease X4 corresponds to the diurea compound represented by the general formula (B1), in which R¹ and R² are stearyl groups, and R³ is a diphenylmethylene group.

The value of {(X+Y)/(X+Y+Z)}×100 specified in the requirement (a) is 100, and the X/Y ratio specified in the requirement (b) is 0/100.

### <Production Example 5>

A base grease Y1 and a grease composition Y1-1 (Example 2) were produced in the following manner using the solution α and the solution β prepared in Production Example 1.

Using the grease manufacturing apparatus 1 shown in Fig. 1, the solution α heated to 60 to 80°C was introduced at a flow rate of 100 to 200 L/h via the solution introducing pipe 4A and the solution β heated to 60 to 80°C was introduced at a flow rate of 100 to 200 L/h via the solution introducing pipe 4B both simultaneously into the container body 2, and the solution α and the solution β were continuously introduced into the container body 2 in a state of rotating the rotor 3. The rotation number of the rotator 3 of the grease manufacturing apparatus 1 used was 7,000 to 9,000 rpm.

The stirring at this time was performed with a maximum shear rate (Max) of 10,500 s⁻¹ and a ratio of the maximum shear rate (Max) to the minimum shear rate (Min) (Max/Min) of 3.5.

To the resulting base grease Y1 under stirring at 120°C, MoDTC (Sakuralube 525, produced by Adeka Corporation) as the organic molybdenum-based compound (C), ZnDTP (HITEC 7169, produced by Afton Chemical Corporation) as the zinc dithiophosphate (D), and a phenol-based antioxidant, sulfurized oil and fat, and benzotriazole as the additional grease additive were added to make the contents thereof shown in Table 2 for Example 2, and the mixture was stirred for 0.5 hour, then spontaneously cooled to 25°C, then treated with a three-stage roll mill, and defoamed, so as to provide a grease composition Y1-1.

### <Production Example 6>

To the base grease Y1 obtained in Production Example 5 under stirring at 120°C, a phenol-based antioxidant and benzotriazole as the additional grease additive were added to make the contents thereof shown in Table 2 for Example 3, and the mixture was stirred for 0.5 hour, then spontaneously cooled to 25°C, then treated with a three-stage roll mill, and defoamed, so as to provide a grease composition Y1-2 (Example 3).

### <Production Example 7>

To the base grease X1 obtained in Production Example 1 under stirring at 120°C, MoDTC as the organic molybdenum-based compound (C), ZnDTP as the zinc dithiophosphate (D), and a phenol-based antioxidant, sulfurized oil and fat, and benzotriazole as the additional grease additive were added to make the contents thereof shown in Table 2 for Example 4, and the mixture was stirred for 0.5 hour, then spontaneously cooled to 25°C, then treated with a three-stage roll mill, and defoamed, so as to provide a grease composition X1-1 (Example 4).

### <Production Example 8>

To the base grease X1 obtained in Production Example 1 under stirring at 120°C, a phenol-based antioxidant and benzotriazole as the additional grease additive were added to make the contents thereof shown in Table 2 for Example 5, and the mixture was stirred for 0.5 hour, then spontaneously cooled to 25°C, then treated with a three-stage roll mill, and defoamed, so as to provide a grease composition X1-2 (Example 5).

The base greases produced in Production Examples 1 to 4 were subjected to the following SRV test 1 to measure the wear track diameter. The results are shown in Table 1.

The grease compositions produced in Production Examples 5 to 8 were subjected to the following SRV tests 2 and 3 to measure the friction coefficient on low load and the friction coefficient on high load. The results are shown in Table 2.

In Tables 1 and 2, "Cy" shows cyclohexylamine, and "C18" shows stearylamine.

### [SRV Test 1: Measurement of Wear Track Diameter]

The wear track diameter (mm) in the use of the prepared base grease was measured according to ASTM D5706 with an SRV tester (produced by Optimol Instruments Prüftechnik GmbH) under the following condition.
Ball: AISI 52100
Disk: AISI 52100
Frequency: 50 Hz
Amplitude: 3.0 mm
Load: 200 N
Temperature: 40°C
Test time: 30 minutes

### [SRV Test 2: Measurement of Friction Coefficient (Low Load)]

The friction coefficient in the use of the prepared grease composition was measured according to ASTM D5706 with an SRV tester (produced by Optimol Instruments Prüftechnik GmbH) under the following condition. The average value of the friction coefficients within 10 minutes from 20 minutes after the start of the test to the end of the test was designated as the friction coefficient (low load).
Ball: AISI 52100
Disk: AISI 52100
Frequency: 30 Hz
Amplitude: 3.0 mm
Load: 35 N
Temperature: 40°C
Test time: 30 minutes

### [SRV Test 3: Measurement of Friction Coefficient (Low Load)]

The friction coefficient in the use of the prepared grease composition was measured according to ASTM D5706 with an SRV tester (produced by Optimol Instruments Prüftechnik GmbH) under the following condition. The average value of the friction coefficients within 10 minutes from 20 minutes after the start of the test to the end of the test was designated as the friction coefficient (high load).
Ball: AISI 52100
Disk: AISI 52100
Frequency: 30 Hz
Amplitude: 3.0 mm
Load: 200 N
Temperature: 40°C
Test time: 30 minutes

**Table 1**

| | | Comparative Example 1 | Comparative Example 2 | Example 1* | Comparative Example 3 |
|---|---|---|---|---|---|
| Base grease | | X2 | X3 | X1 | X4 |
| Cy/C18 ratio | | Cy/C18 = 1/0 | Cy/C18 = 4/1 | Cy/C18 = 3/2 | Cy/C18 = 0/1 |
| Base grease | Cy (% by mass) | 7.00 | 2.15 | 1.00 | - |
| | C18 (% by mass) | - | 1.46 | 1.81 | 10.00 |
| | MDI (% by mass) | 9.10 | 3.50 | 2.17 | 4.79 |
| | Base oil 1 (low viscosity base oil) (% by mass) | 29.00 | 29.00 | 29.00 | 29.00 |
| | Base oil 2 (high viscosity base oil) (% by mass) | 54.90 | 63.89 | 66.02 | 56.21 |
| | Total (% by mass) | 100.00 | 100.00 | 100.00 | 100.00 |
| | Amount of thickening agent | 16.10 | 7.11 | 4.98 | 14.79 |
| | Molar % of Cy | 100.0 | 80.0 | 60.0 | 0.0 |
| | Working penetration | 296 | 309 | 308 | 310 |
| Requirement | (a) | 100 | 100 | 100 | 100 |
| | (b) | 100/0 | 80/20 | 60/40 | 0/100 |
| Evaluation result | SRV test 1 (wear track diameter, unit: mm) | 0.638 | 0.641 | 0.609 | 0.662 |

| | | | | | |
|---|---|---|---|---|---|
| * Reference example | | | | | |

**Table 2**

| | | Example 2 | Example 3* | Example 4* | Example 5* |
|---|---|---|---|---|---|
| Grease composition | | Y1-1 | Y1-2 | X1-1 | X1-2 |
| Base grease | Base grease Y1 (high dispersion method) (% by mass) | 94.40 | 99.37 | - | - |
| | Base grease X1 (normal method) (% by mass) | - | - | 94.40 | 99.37 |
| | MoDTC (% by mass) | 1.00 | - | 1.00 | - |
| | ZnDTP (% by mass) | 2.00 | - | 2.00 | - |
| | Phenol-based antioxidant (% by mass) | 0.50 | 0.53 | 0.50 | 0.53 |
| | Sulfirized oil and fat (% by mass) | 2.00 | - | 2.00 | - |
| | Benzotriazole (% by mass) | 0.10 | 0.11 | 0.10 | 0.11 |
| | Total (% by mass) | 100.00 | 100.00 | 100.00 | 100.00 |
| Requirement | (a) | 100 | 100 | 100 | 100 |
| | (b) | 60/40 | 60/40 | 60/40 | 60/40 |
| Evaluation result | SRV test 2 (friction coefficient, low load) | 0.053 | 0.121 | 0.059 | 0.134 |
| | SRV test 3 (friction coefficient, high load) | 0.051 | 0.153 | 0.075 | 0.159 |

| | | | | | |
|---|---|---|---|---|---|
| * Reference example | | | | | |

It is understood from Table 1 as follows.

The base grease X1 of Reference Example 1 satisfying the "requirement (b): the X/Y ratio is 10/90 to 75/25" specified for the urea-based thickening agent (B) represented by the general formula (B1) exhibits a small wear track diameter and thus has an excellent wear resistance, but the base greases X2, X3, and X4 of Comparative Examples 1 to 3 each containing a urea-based thickening agent that does not satisfy the requirement (b) each exhibit a large wear track diameter and are inferior in wear resistance.

It is understood from Table 2 as follows.

The grease compositions of Example 2 and reference Example 3 to 5 each exhibit a small friction coefficient in the SRV tests in both the low load and high load cases. Accordingly, it is understood that the grease compositions each have excellent friction characteristics in both the low load and high load cases.

It is also understood that the use of MoDTC as the organic molybdenum-based compound (C) and ZnDTP as the zinc dithiophosphate (D) as the additives as in the grease compositions Y1-1 and X1-1 of Example 2 and Reference Example 4 largely decreases the friction coefficients in the SRV tests, and thus significantly improves the friction characteristics.

It is further understood that the grease compositions obtained through the high dispersion method, i.e., the grease compositions Y1-1 and Y1-2 of Example 2 and Reference Example 3, each have friction coefficients in the SRV tests that are further decreased from the grease compositions X1-1 and X1-2 of Reference Examples 4 and 5 obtained through the normal method, and thus each have further excellent friction characteristics.

The grease compositions obtained through the high dispersion method, i.e., the grease compositions Y1-1 and Y1-2 of Example 2 and Reference Example 3, each have a particle diameter distribution curve having a peak with the maximum frequency that satisfies the following requirements (I) and (II).

Requirement (I): the particle diameter at the peak with the maximum frequency is 1.0 pm or less.

Requirement (II): the peak has a full width at half maximum of 1.0 pm or less.

On the other hand, the grease compositions X1-1 and X1-2 of Reference Examples 4 and 5 obtained through the normal method do not satisfy the requirements (I) and (II).

It is thus understood that the satisfaction of the requirements (I) and (II) further decreases the friction coefficients in the SRV tests, resulting in a grease composition having further excellent friction characteristics.

## Claims

1. A grease composition for a constant velocity joint,
comprising a base oil (A) and a urea-based thickening agent (B) represented by the following general formula (B1):
R¹-NHCONH-R³-NHCONH-R² (B1)
wherein in the general formula (B1), R¹ and R² each independently represent a monovalent hydrocarbon group having 6 to 24 carbon atoms, provided that R¹ and R² may be the same as or different from each other; and R³ represents a divalent aromatic hydrocarbon group having 6 to 18 carbon atoms,
the monovalent hydrocarbon group contains an alicyclic hydrocarbon group and a chain hydrocarbon group, and may contain an aromatic hydrocarbon group, provided that assuming that in R¹ and R² in the general formula (B1), the content of the alicyclic hydrocarbon group is X molar equivalent, the content of the chain hydrocarbon group is Y molar equivalent, and the content of the aromatic hydrocarbon group is Z molar equivalent, the following requirements (a) and (b) are satisfied:
requirement (a): a value of {(X+Y)/(X+Y+Z)}×100 is 90 or more
requirement (b): an X/Y ratio is 10/90 to 75/25,
wherein the grease composition further comprises particles formed through aggregation of the urea-based thickening agent (B), wherein a particle diameter distribution curve on a volume basis in a light scattering particle diameter measurement of the particles containing the urea-based thickening agent (B) has a peak with the maximum frequency that satisfies the following requirements (I) and (II):
requirement (I): the particle diameter at the peak with the maximum frequency is 1.0 pm or less;
requirement (II): the peak has a full width at half maximum of 1.0 pm or less,
wherein the grease composition further comprises an organic molybdenum-based compound (C), and
wherein the grease composition further comprises a zinc dithiophosphate (D).

2. The grease composition according to claim 1, wherein the grease composition has a worked penetration at 25°C of 220 to 385, as measured according to JIS K2020 7.2013.

## Patentansprüche

1. Schmiermittelzusammensetzung für ein Gleichlaufgelenk,
umfassend ein Basisöl (A) und ein harnstoffbasiertes Verdickungsmittel (B), dargestellt durch die folgende allgemeine Formel (B1):
R¹-NHCONH-R³-NHCONH-R² (B1)
wobei in der allgemeinen Formel (B1) R¹ und R² jeweils unabhängig voneinander für eine monovalente Kohlenwasserstoffgruppe mit 6 bis 24 Kohlenstoffatomen stehen, mit der Maßgabe, dass R¹ und R² gleich oder voneinander verschieden sein können; und R³ für eine divalente aromatische Kohlenwasserstoffgruppe mit 6 bis 18 Kohlenstoffatomen steht,
die monovalente Kohlenwasserstoffgruppe eine alicyclische Kohlenwasserstoffgruppe und eine Kohlenwasserstoffkettengruppe enthält und eine aromatische Kohlenwasserstoffgruppe enthalten kann, mit der Maßgabe, dass unter der Annahme, dass in R¹ und R² in der allgemeinen Formel (B1) der Gehalt der alicyclischen Kohlenwasserstoffgruppe X Moläquivalente beträgt, der Gehalt der Kohlenwasserstoffkettengruppe Y Moläquivalente beträgt und der Gehalt der aromatischen Kohlenwasserstoffgruppe Z Moläquivalente beträgt, die folgenden Anforderungen (a) und (b) erfüllt sind:
Anforderung (a): ein Wert von {(X+Y)/(X+Y+Z)}×100 beträgt 90 oder mehr
Anforderung (b): ein X/Y-Verhältnis beträgt 10/90 bis 75/25,
wobei die Schmiermittelzusammensetzung weiterhin Partikel, gebildet durch Aggregation des harnstoffbasierten Verdickungsmittels (B), umfasst,
wobei eine Partikeldurchmesser-Verteilungskurve auf Volumenbasis in einer Lichtstreuungs-Partikeldurchmesser-Messung der Partikel, enthaltend das harnstoffbasierte Verdickungsmittel (B), einen Peak mit der maximalen Frequenz aufweist, der die folgenden Anforderungen (I) und (II) erfüllt:
Anforderung (I): der Partikeldurchmesser an dem Peak mit der maximalen Frequenz beträgt 1,0 um oder weniger;
Bedingung (II): der Peak weist eine Halbwertsbreite von 1,0 um oder weniger auf,
wobei die Schmiermittelzusammensetzung weiterhin eine organische molybdänbasierte Verbindung (C) umfasst, und
wobei die Schmiermittelzusammensetzung weiterhin ein Zinkdithiophosphat (D) umfasst.

2. Schmiermittelzusammensetzung gemäß Anspruch 1, wobei die Schmiermittelzusammensetzung eine bearbeitete Penetration bei 25°C von 220 bis 385, gemessen gemäß JIS K2020 7.2013, aufweist.

## Revendications

1. Composition de graisse pour joint homocinétique,
comprenant une huile de base (A) et un agent épaississant (B) à base d'urée représenté par la formule générale (B1) suivante :
R¹-NHCONH-R³-NHCONH-R² (B1)
dans laquelle, dans la formule générale (B1), R¹ et R² représentent chacun indépendamment un groupe hydrocarboné monovalent ayant 6 à 24 atomes de carbone, à condition que R¹ et R² puissent être identiques l'un à l'autre ou différents l'un de l'autre ; et R³ représente un groupe hydrocarboné aromatique divalent ayant 6 à 18 atomes de carbone,
le groupe hydrocarboné monovalent contient un groupe hydrocarboné alicyclique et un groupe hydrocarboné en chaîne, et peut contenir un groupe hydrocarboné aromatique, à condition qu'en supposant que dans R¹ et R² dans la formule générale (B1), la teneur en groupe hydrocarboné alicyclique est X équivalent molaire, la teneur en groupe hydrocarboné en chaîne est Y équivalent molaire et la teneur en groupe hydrocarboné aromatique est Z équivalent molaire, les exigences (a) et (b) suivantes soient satisfaites :
exigence (a) : une valeur de {(X+Y)/(X+Y+Z)}×100 est de 90 ou plus
exigence (b) : un rapport X/Y est de 10/90 à 75/25,
dans laquelle la composition de graisse comprend en outre des particules formées par l'agrégation de l'agent épaississant (B) à base d'urée, dans laquelle une courbe de répartition des diamètres des particules sur une base volumique dans une mesure de diamètre de particule par diffusion de lumière des particules contenant l'agent épaississant (B) à base d'urée présente un pic ayant la fréquence maximale qui satisfait aux exigences (I) et (II) suivantes :
exigence (I) : le diamètre de particule au niveau du pic ayant la fréquence maximale est de 1,0 µm ou moins :
exigence (II) : le pic présente une largeur à mi-hauteur de 1,0 µm ou moins,
dans laquelle la composition de graisse comprend en outre un composé organique (C) à base de molybdène, et
dans laquelle la composition de graisse comprend en outre un dithiophosphate de zinc (D).

2. Composition de graisse selon la revendication 1, dans laquelle la composition de graisse présente une pénétration travaillée à 25 °C de 220 à 385. telle que mesurée conformément au JIS K2020 7.2013.
